# DEMANDE DE BREVET EUROPEEN

(11) **EP 2 063 638 A1**
(43) Date de publication de la demande: **27.05.2009**
(21) Numéro de dépôt: 07121526.3
(22) Date de dépôt: 26.11.2007
(51) Int. Cl.: H04N 7/16, H04N 7/167

(54) **Méthode d'évaluation de droits d'utilisateurs stockés dans un module de sécurité**

(71) Demandeur: Nagravision S.A., 1033 Cheseaux-sur-Lausanne (CH)
(72) Inventeur: Carrel, Xavier, 1052, Le Mont-sur-Lausanne (CH); Cochard, Jimmy, 1616 Attalens (CH); Erard, Sébastien, 1004 Lausanne (CH); Wirz, Christian, 1004 Lausanne (CH)
(74) Mandataire: Leman Consulting S.A.

(57) **Abrégé**

Le but de la présente invention consiste à réduire le temps de commutation d'un canal de réception vers un autre. En effet, cette réduction sera d'autant plus perceptible que le nombre de droits différents stockés dans le module de sécurité d'une unité multimédia ou décodeur est élevé.

Ce but est atteint par une méthode d'évaluation de droits d'utilisateur stockés dans un module de sécurité SM associé à une unité multimédia STB comprenant un récepteur de données numériques de services encryptées diffusées et un module central de contrôle d'accès CAK disposant d'une mémoire M1 apte à stocker une réplique de la table Td des droits d'utilisateur du module de sécurité SM auquel il est relié et une table d'information de services SI comprenant des descripteurs DES des services incluant des identificateurs ID des droits D associés aux dits services, ledit module de contrôle d'accès CAK recevant d'une part au moins un message de contrôle ECM encrypté, destiné au module de sécurité SM, contenant au moins un identificateur ID de droit et au moins un mot de contrôle CW et d'autre part un descripteur DES d'un service sélectionné, caractérisée en qu'elle comprend les étapes suivantes:
- exploration par le module de contrôle d'accès CAK de la table d'information de service SI et extraction à partir du descripteur DES d'au moins un identificateur ID d'un droit D associé au service sélectionné,
- recherche dans la table des droits Td d'un index In correspondant au droit D associé au service sélectionné,
- lorsque la recherche donne un résultat positif, transmission de l'index In du droit D au module de sécurité SM,
- décryption, par le module de sécurité SM, du message de contrôle ECM et extraction de l'identificateur ID du droit inclus dans le message ECM,
- vérification des droits présents dans le module de sécurité SM en débutant la vérification dans la table des droits dudit module de sécurité SM par le droit désigné par l'index In.

## Description

### Domaine de l'invention

La présente invention concerne le domaine du traitement des droits d'accès à des flux transportant des données cryptées de divers services diffusés tels que la télévision à péage.

### Arrière plan technique

Une pluralité d'unités multimédia connectées à un centre de gestion reçoivent et traitent les flux de données diffusés en fonction de droits d'accès stockés dans un ou des modules de sécurité associés audites unités. Ces dernières comprennent des ordinateurs personnels, des décodeurs ou des équipements mobiles.

Un module de sécurité est un dispositif réputé inviolable contenant diverses clés d'encryption/décryption, des informations servant à identifier un utilisateur sur un réseau et des données qui définissent des droits acquis par l'utilisateur pour la réception d'un contenu de services diffusé. Le module de sécurité peut se trouver sous différentes formes telles qu'une carte à puce amovible insérée dans un lecteur, un circuit intégré soudé sur une carte mère, une carte du type SIM (Subscriber Identity Module) que l'on rencontre dans la plupart des équipements mobiles.

Une unité multimédia comprend un module central matériel et logiciel de contrôle d'accès appelé CAK (Control Access Kernel) relié au module de sécurité, à un module de démultiplexage du flux, à un module de décryption, à des applications comme le guide électronique de programme (EPG) et à une voie de retour vers le centre de gestion. Le module CAK est chargé, entre autres fonctions, d'acheminer les messages de contrôle ECM et les messages d'administration EMM extraits du flux démultiplexé des données numériques vers le module de sécurité. Ce dernier traite, vérifie et décrypte les messages de contrôle ECM en fonction des droits stockés et mis à jour par les messages d'administration EMM. Les mots de contrôle, extraits des messages de contrôle ECM après leur vérification positive, sont ensuite transmis au module de décryption afin de générer des données en clair prêtes à être exploitées par l'utilisateur.

Les flux reçus par les unités multimédia transportent un nombre de plus en plus important de canaux multiplexés correspondant, par exemple, à des programmes de télévision et à divers services d'informations. L'utilisateur sélectionne ces différents canaux à l'aide d'un guide de programme affiché sur un écran dans le but de les visionner en direct ou en différé en les enregistrant dans une mémoire associée à l'unité multimédia. Ce grand nombre de programmes et leurs possibilités d'exploitation (copies, enregistrement temporaires, transfert vers d'autres unités) impliquent également le stockage de nombreux droits dans le module de sécurité. Lorsque l'utilisateur sélectionne un canal puis passe rapidement à un ou plusieurs autres canaux, le temps de traitement des données par le module de sécurité et le module de contrôle d'accès CAK de l'unité multimédia augmente proportionnellement à la diversité des droits d'accès. En effet après chaque sélection d'un canal les conditions d'accès spécifiques à chaque programme ou type de programme sont comparées avec les droits stockés dans le module de sécurité et lorsque ceux-ci deviennent nombreux leur traitement peut prendre plusieurs centaines de millisecondes. Ce temps de traitement relativement long peut occasionner une absence d'image ou de son non souhaitable lors d'un passage rapide d'un canal vers un autre, plus communément appelé zapping.

Lors de la réception de programmes de télévision, le temps de commutation entre les canaux est dû essentiellement à l'acquisition des données numériques comprenant les informations nécessaires au décryptage et au traitement des données du nouveau canal sélectionné. Les données audio/vidéo sont en général diffusées sous forme compressée au format MPEG (Moving Pictures Expert Group). Ce format est divisé selon une hiérarchie de couches afin de faciliter la gestion d'erreur, la recherche aléatoire, l'édition, et la synchronisation avec d'autres signaux comme le flux audio. La première couche appelée couche de séquence vidéo comprend des informations comme la taille de la trame image, le taux d'échantillonnage (bit rate) et le taux d'images (frame rate). La seconde couche est le groupe de couches d'images comprenant un ou plusieurs groupes de trames image composé de:
- trames image de type I-frame contenant les données pour construire une image complète en utilisant une compression très similaire au JPEG (Joint Photographic Experts Group),
- de trames type P-frame représentant les différences par rapport à une image antérieure
- et de trames de type B-frame représentant l'image prédite en fonction de l'image précédente et de l'image suivante.

La troisième couche ou couche image comprend la trame et les informations de taille de la trame. Une séquence vidéo d'un groupe de couches image est constituée à partir de la trame I-frame reçue le plus récemment et de ses trames P et B subséquentes. La trame I du début de la séquence est la plus critique car lorsque l'utilisateur change de canal après la transmission d'une trame I, il doit attendre la transmission de la prochaine trame I afin de décoder les trames P et B suivantes. Les trames I sont transmises généralement à une fréquence inférieure ou égale à deux par seconde. Dans la plupart des applications la séquence est aussi protégée par le chiffrement du flux binaire lors de la transmission. Pour le déchiffrement, les mots de contrôle des messages ECM du système à accès conditionnel sont également nécessaires pour déchiffrer les trames I, P et B. Le temps mis par ces opérations de déchiffrement s'ajoute au temps de commutation des canaux surtout si les messages de contrôle ECM sont transmis à faible débit.

Le document W02006044547 propose une méthode d'accroissement de la vitesse de commutation de canaux basée sur le stockage d'informations de canaux selon des règles de sélection de canaux prédéterminées. Dans un exemple de réalisation, les informations de canaux comprennent au moins une trame de type I, un message de contrôle ECM et un mot de contrôle. Un module de gestion des mots de contrôle reçoit des messages ECM de plusieurs canaux et sélectionne le mot de contrôle à mémoriser selon des règles stockées dans un module approprié. Des règles de sélection d'entrée similaires déterminent les canaux à partir desquels les trames I doivent être stockées. Par exemple le décodeur traite en priorité les canaux les plus souvent visionnés, les canaux favoris déterminé par l'utilisateur ou les plus importants déterminés par un opérateur, le ou les canaux adjacents au canal en cours de visionnement. Ces listes de canaux prioritaires peuvent aussi être mises à jour dynamiquement lors de changement de canal par l'utilisateur et périodiquement lors de changement de messages ECM.

Le document WO03098919A1 décrit une méthode basée sur la prédiction des canaux qu'un utilisateur pourrait sélectionner comme par exemple les canaux consécutifs au canal courant. Pour les canaux prédits, le démultiplexeur fournit le flux de mots de contrôle et le dernier mot de contrôle décrypté est stocké. Lors de la sélection du canal prédit, le mot de contrôle peut être mis immédiatement à disposition du module de déchiffrement afin de permettre à l'utilisateur un accès rapide au contenu du canal.

### Description sommaire de l'invention

Le but de la présente invention consiste à réduire le temps de commutation d'un canal de réception vers un autre. En effet, cette réduction sera d'autant plus perceptible que le nombre de droits différents stockés dans le module de sécurité d'une unité multimédia ou décodeur est élevé.

Ce but est atteint par une méthode d'évaluation de droits d'utilisateur stockés dans un module de sécurité associé à une unité multimédia comprenant un récepteur de données numériques de services encryptées diffusées et un module central de contrôle d'accès disposant d'une mémoire apte à stocker une réplique de la table des droits d'utilisateur du module de sécurité auquel il est relié et une table d'information de services comprenant des descripteurs des services incluant des identificateurs des droits associés aux dits services, ledit module de contrôle d'accès recevant d'une part au moins un message de contrôle encrypté, destiné au module de sécurité, contenant au moins un identificateur de droit et au moins un mot de contrôle et d'autre part un descripteur d'un service sélectionné, caractérisée en qu'elle comprend les étapes suivantes:
- exploration par le module de contrôle d'accès de la table d'information de service et extraction à partir du descripteur d'au moins un identificateur d'un droit associé au service sélectionné,
- recherche dans la table des droits d'un index correspondant au droit associé au service sélectionné,
- lorsque la recherche donne un résultat positif, transmission de l'index du droit au module de sécurité,
- décryption, par le module de sécurité, du message de contrôle et extraction de l'identificateur du droit inclus dans le message,
- vérification des droits présents dans le module de sécurité en débutant la vérification dans la table des droits dudit module de sécurité par le droit désigné par l'index.
   Lorsque l'utilisateur sélectionne un service parmi ceux qui sont proposés par le guide électronique des programmes, le module de contrôle d'accès explore la table d'information de service stockée afin de déterminer un identificateur d'un droit d'accès au dit service. Cet identificateur permet de déterminer un index dans la table des droits stockée dans le module de contrôle d'accès. Le module de contrôle d'accès transmet au module de sécurité l'index ainsi déterminé seul ou accompagné par le message de contrôle. Cet index permet au module de sécurité de trouver rapidement l'identificateur du droit correspondant qu'il compare ensuite avec l'identificateur du droit inclus dans le message de contrôle après décryption de celui-ci.
   L'avantage de la méthode est d'assurer une détermination rapide du droit d'accès aux données diffusées grâce à la recherche préalable d'index effectuée par le module de contrôle d'accès sur la base du descripteur du service sélectionné.
   En cas de résultat négatif lors de la recherche de l'index du droit dans la table du module de contrôle d'accès, aucun index n'est transmis au module de sécurité. Ce dernier décrypte le message de contrôle et extrait l'identificateur du droit afin de le comparer avec les identificateurs des droits stockés dans la table du module de sécurité.
   En fonction de la configuration de l'ensemble des droits stockés dans cette table, le module de sécurité décide d'autoriser ou de rejeter la décryption du contenu. Ce processus est bien entendu plus long car les tâches de recherche et de détermination des droits sont effectuées par le module de sécurité sans l'aide préalable du module de contrôle d'accès. Ce dernier possède en en effet un processeur et des logiciels de calcul plus rapides que ceux du module de sécurité.

### Brève description des figures

L'invention sera mieux comprise grâce à la description détaillée qui va suivre et qui se réfère aux figures annexées données à titre d'exemples nullement limitatifs.
- La figure 1 illustre un schéma bloc simplifié d'une unité multimédia montrant les différents modules intervenant dans la méthode d'évaluation de droits d'utilisateur selon l'invention.
- La figure 2 illustre le mécanisme d'extraction d'identificateurs de droits associés à des canaux sélectionnés à partir de la table d'information de services et de recherche d'index correspondant à ces identificateurs dans la table des droits.

### Description détaillées de l'invention

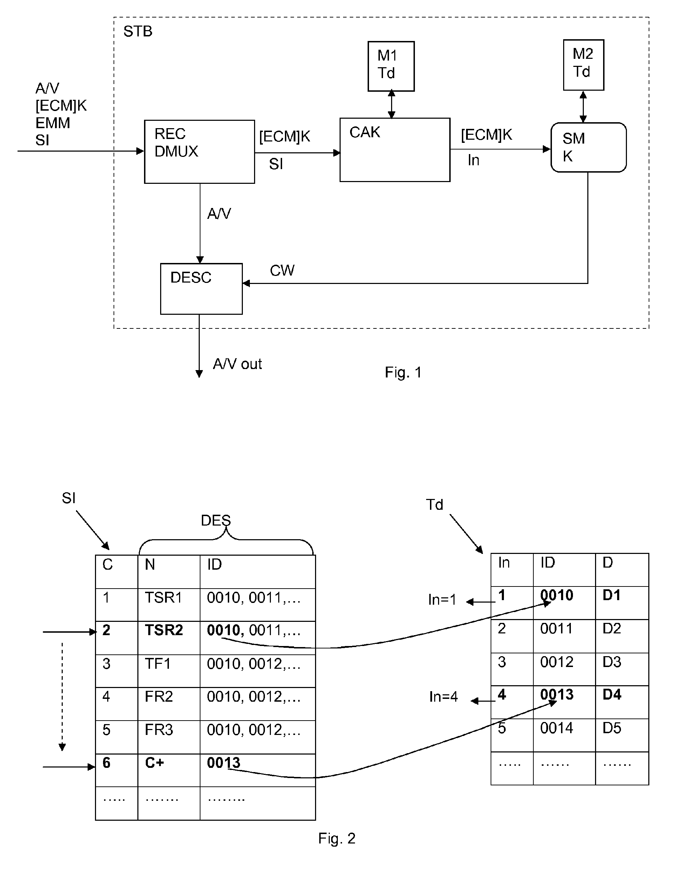

Une unité multimédia (STB) telle que représentée schématiquement par la figure 1 comprend un module récepteur démultiplexeur (REC, DMUX) chargé de filtrer les différents flux de données numériques encryptées reçus contenant essentiellement des données de services audio/vidéo A/V, des messages de contrôle ECM, des messages d'administration EMM et des informations de services SI. Les messages de contrôle ECM sont encryptés avec une clé K connue du module de sécurité SM, et contiennent au moins un mot de contrôle CW servant de clé de décryption des données de services audio/vidéo A/V et au moins un identificateur de droit ID. Ces messages de contrôle ECM sont acheminés vers le module de contrôle d'accès CAK puis vers le module de sécurité SM pour traitement.

Les mots de contrôle CW ne sont extraits du message de contrôle ECM et décryptés par le module de sécurité SM que lorsque les conditions d'accès contenues dans le message ECM correspondent aux droits stockés dans le module sécurité SM. Ils sont ensuite acheminés vers le module de décryption DESC recevant les données de contenu services audio/vidéo A/V de la part du module récepteur démultiplexeur (REC, DMUX). Le module de décryption DESC décrypte ces données A/V afin de les fournir en clair à la sortie de l'unité multimédia.

Les messages d'administration EMM également extraits du flux d'entrée acheminés vers le module de sécurité SM permettent de renouveler et/ou mettre à jour les droits qui y sont stockés.

Les informations de services SI extraites du flux d'entrée sont traitées par le module de contrôle d'accès CAK pour créer un guide électronique de programmes permettant à l'utilisateur de sélectionner des services diffusés et d'accéder à des informations décrivant ces services telles que l'horaire de diffusion, le type de service, le coût pour un achat impulsif (IPPV) d'un programme de télévision, les droits d'accès au service, etc. Le guide électronique de programme utilise les informations des droits stockés dans la mémoire M1 du module de contrôle d'accès CAK.

Il est à noter que la mémoire M1 du module de contrôle d'accès CAK stocke une copie de la table des droits Td contenue dans une mémoire M2 du module de sécurité. La table des droits Td dont un exemple est montré par la figure 2 comprend des lignes numérotées par un index In correspondant chacune à un droit et des colonnes contenant les identificateurs ID et les descriptions D des droits de chaque ligne. Ces descriptions D comprennent un identificateur de service ou de programme, des données temporelles de validité de l'accès au service ou au programme telles que des dates de début de validité et d'expiration de l'accès, des règles d'accès telles que le nombre d'accès autorisés, les possibilités d'enregistrement du contenu, etc.

La figure 2 montre le mécanisme de recherche d'un index correspondant à un droit d'accès à un canal de télévision exécuté par un décodeur ou plus précisément par le logiciel installé dans le module de contrôle d'accès CAK.

L'utilisateur sélectionne par exemple le canal 2 par le biais d'un guide de programme affiché sur un écran issu de la table d'information de service SI fournie par le flux de données reçu puis stockée dans une mémoire du module de contrôle d'accès CAK. La table SI associe à chaque numéro de canal C un descripteur DES contenant des informations telles que le nom N du canal, les caractéristiques des programmes diffusés dans ce canal ainsi que les conditions d'accès à ce canal sous forme d'identificateurs de droits ID. Dans l'exemple de la figure 2, lorsque l'utilisateur sélectionne le canal 2, le module de contrôle d'accès CAK explore la table des services SI afin de déterminer un identificateur ID d'un droit associé à ce canal et extrait par exemple l'identificateur ID = 0010. Cet identificateur ID = 0010 est ensuite recherché dans la table des droits Td et en cas de succès le module de contrôle d'accès CAK transmet un index In = 1 au module de sécurité SM. Ce dernier, possédant la même table des droits Td dans la mémoire M2, commence la vérification des droits en comparant l'identificateur du droit ID = 0010 désigné par l'index In = 1 avec l'identificateur du droit contenu dans le message de contrôle ECM qu'il a préalablement reçu et décrypté à l'aide de la clé K. Lorsque la comparaison donne un résultat positif, c'est-à-dire lorsque les identificateurs des droits sont équivalents le module de sécurité peut autoriser la décryption des données du programme sélectionné avec le mot de contrôle CW également extrait du message de contrôle ECM.

En général, la libération du mot de contrôle CW résulte d'une vérification plus poussée des droits que la simple vérification de l'équivalence entre un identificateur du message ECM et l'identificateur ID désigné par l'index In dans la table Td des droits. En effet, le module de sécurité SM vérifie, en plus, la signature de tous les droits inclus dans le message de contrôle ECM. Cette signature est décryptée avec une clé du module de sécurité puis l'empreinte ainsi obtenue est comparée avec une empreinte calculée par le module de sécurité avec les droits inclus dans le message de contrôle ECM. Lorsque ces deux empreintes sont égales, le module de sécurité considère que les droits du message ECM sont authentiques. La vérification porte également sur des paramètres associés aux droits contenus dans la tables des droits Td tels que des données temporelles de validité des droits par rapport à la date et l'heure courantes, des nombres et des types d'accès effectués précédemment, etc. Lorsque toutes ces vérifications aboutissent à des résultats positifs, le module de sécurité SM autorise la décryption des données du programme sélectionné.

Il est à noter que le descripteur DES d'un canal peut contenir plusieurs identificateurs de droits correspondant chacun par exemple à un type d'abonnement donné (mensuel, annuel, limité à certains programmes etc.). Le message de contrôle ECM transmis dans le canal sélectionné contient également un ou plusieurs identificateurs des droits nécessaires pour accéder au programme.

Lorsque l'utilisateur passe du canal 2 au canal 6, le module de contrôle d'accès CAK fournit l'index In = 4 au module de sécurité car les conditions d'accès au canal 6 ne sont pas les mêmes que celles du canal 2. En effet, l'identificateur ID = 0013 de la table SI donne l'index In = 4 dans la table des droits.

Selon une variante, le module de contrôle d'accès CAK transmet au module de sécurité le message de contrôle ECM reçu du canal sélectionné accompagné de l'index In permettant de déterminer le droit d'accès dans la table des droits du module de sécurité SM.

Selon une autre variante, le module de contrôle d'accès CAK stocke les résultats des recherches d'index In dans une mémoire sous la forme d'une table de transactions indiquant un numéro de recherche, le numéro du canal et l'index trouvé lors de cette recherche. Ainsi lors d'un changement de canal, le module de contrôle d'accès CAK consulte d'abord cette table de transactions pour déterminer directement l'index In du droit D d'accès au nouveau canal. Si l'index In ne se trouve pas dans la table de transactions, le module de contrôle d'accès CAK explore la table d'information des services SI afin de déterminer l'identificateur ID du droit permettant de rechercher l'index In correspondant dans la table Td des droits.

Cette variante permet d'économiser le temps d'extraction de l'identificateur des droits de la table d'information de services SI et de recherche de l'index correspondant dans la table Td des droits.

Lors de commutations fréquentes de canaux (zapping) souvent sélectionnés précédemment, cette variante permet de réduire au maximum le temps d'évaluation des droits d'accès qui est le but recherché par la présente invention.

Dans ce procédé, le module de contrôle d'accès CAK contribue à une recherche rapide du droit d'accès par la mise à disposition d'un index In de droit au module de sécurité SM. Cet index In permet d'éviter une recherche systématique par le module de sécurité dans toute la table des droits. Cependant, une telle recherche est effectuée dans le cas où le module de sécurité ne reçoit aucun index en raison de l'absence de droit correspondant au canal sélectionnée dans la table des droits. Cette situation se présente par exemple lorsque l'utilisateur de l'unité multimédia tente de sélectionner un canal ou un service dont il ne dispose pas les droits d'accès suffisants ou lorsque la table des droits stockée dans la mémoire M1 du module de contrôle d'accès CAK est obsolète ou invalide.

Dans un tel cas, le module de sécurité décrypte le message de contrôle ECM puis compare les identificateurs des droits du message avec ceux stockés dans la table des droits Td, vérifie lesdits droits et décide d'autoriser la décryption du mot de contrôle CW si la configuration des autres droits stockés le permet. Par exemple un droit d'accès à plusieurs chaînes diffusant des matches de football peut entraîner un droit d'accès temporaire à une chaîne diffusant des matches de rugby. Si la configuration des autres droits est incompatible ou en raison d'une exclusion due à un contrôle parental par exemple, le module de sécurité SM rejette l'autorisation de décryption du mot de contrôle CW.

Selon une option, le module de sécurité SM stocke les index In des identificateurs ID des droits qui ont été vérifiés avec succès, c'est-à-dire ceux des droits dont les résultats de la comparaison avec les droits des messages de contrôle ECM ont été positifs. A la réception d'un index In, le module de sécurité SM vérifie d'abord si cet index In a déjà été fourni auparavant par le module de contrôle d'accès CAK avant d'accéder à la table des droits TD stockée dans la mémoire M2.

Selon une autre option, lorsqu'aucun index n'est transmis au module de sécurité par le module de contrôle d'accès CAK et lorsque les index In des identificateurs ID des droits qui ont été vérifiés avec succès sont stockés, le module de sécurité peut débuter la vérification des droits en utilisant un index stocké précédemment. Cette option permet également d'accélérer l'exploration de la table des droits par le module de sécurité par rapport à une exploration systématique de la table des droits qui serait effectuée lorsqu'aucun index n'est transmis ni stocké par le module de sécurité.

## Revendications

1. Méthode d'évaluation de droits d'utilisateur stockés dans un module de sécurité SM associé à une unité multimédia STB comprenant un récepteur de données numériques de services encryptées diffusées et un module central de contrôle d'accès CAK disposant d'une mémoire M1 apte à stocker une réplique de la table Td des droits d'utilisateur du module de sécurité SM auquel il est relié et une table d'information de services SI comprenant des descripteurs DES des services incluant des identificateurs ID des droits D associés aux dits services, ledit module de contrôle d'accès CAK recevant d'une part au moins un message de contrôle ECM encrypté, destiné au module de sécurité SM, contenant au moins un identificateur ID de droit et au moins un mot de contrôle CW et d'autre part un descripteur DES d'un service sélectionné, **caractérisée en qu'**elle comprend les étapes suivantes:
- exploration par le module de contrôle d'accès CAK de la table d'information de service SI et extraction à partir du descripteur DES d'au moins un identificateur ID d'un droit D associé au service sélectionné,
- recherche dans la table des droits Td d'un index In correspondant au droit D associé au service sélectionné,
- lorsque la recherche donne un résultat positif, transmission de l'index In du droit D au module de sécurité SM,
- décryption, par le module de sécurité SM, du message de contrôle ECM et extraction de l'identificateur ID du droit inclus dans le message ECM,
- vérification des droits présents dans le module de sécurité SM en débutant la vérification dans la table des droits dudit module de sécurité SM par le droit désigné par l'index In.

2. Méthode selon la revendication 1, **caractérisée en ce que** le module de sécurité compare l'identificateur ID du droit D désigné par l'index In avec l'identificateur du droit contenu dans le message de contrôle ECM préalablement décrypté et lorsque lesdits identificateurs des droits sont équivalents le module de sécurité autorise la décryption des données du programme sélectionné avec le mot de contrôle CW également extrait du message de contrôle ECM.

3. Méthode selon les revendications 1 et 2, **caractérisée en ce que** le module de sécurité vérifie la signature des droits contenus dans le message de contrôle ECM et les paramètres associés aux droits contenus dans la table Td des droits avant d'autoriser la décryption des données du programme sélectionné avec le mot de contrôle CW.

4. Méthode selon la revendication 1, **caractérisée en ce que** lorsque la recherche de l'index dans la table des droits Td donne un résultat négatif, le module de sécurité décrypte le message de contrôle ECM, extrait l'identificateur du droit, compare ledit identificateur avec les identificateurs des droits stockés dans la table des droits Td, vérifie lesdits doits et autorise ou rejette la décryption du mot de contrôle CW selon la configuration des droits stockés.

5. Méthode selon la revendication 1, **caractérisée en ce que** le module de contrôle CAK d'accès transmet au module de sécurité SM le message de contrôle ECM accompagné de l'index In correspondant au droit D d'accès au service sélectionné.

6. Méthode selon la revendication 1, **caractérisée en ce que** le module de contrôle d'accès stocke dans une mémoire les résultats des recherches d'index sous la forme d'une table de transaction contenant au moins un identificateur des services sélectionnés et l'index trouvé lors de la recherche.

7. Méthode selon la revendication 6, **caractérisée en ce que** le module de contrôle d'accès recherche un index dans la table de transaction avant d'accéder à la table des droits Td lors de la sélection d'un service.

8. Méthode selon la revendication 1, **caractérisée en ce que** le module de sécurité SM stocke les index In des identificateurs ID des droits dont les résultats de la comparaison avec les droits des messages de contrôle ECM ont été positifs.

9. Méthode selon la revendication 8, **caractérisée en ce que** le module de sécurité SM vérifie la présence d'index fournis auparavant par le module de contrôle d'accès CAK avant d'accéder à la table des droits Td stockée dans la mémoire M2.
